# EUROPÄISCHE PATENTSCHRIFT

(11) **EP 3 253 526 B1**
(45) Veröffentlichungstag und Bekanntmachung des Hinweises auf die Patenterteilung: **26.02.2025**
(21) Anmeldenummer: 16700105.6
(22) Anmeldetag: 06.01.2016
(51) Int. Cl.: B23K 20/10, B23K 20/24, B23K 20/26, H01R 43/02, H01R 4/02

(54) **ULTRASCHALLSCHWEISSVORRICHTUNG SOWIE VERFAHREN ZUM ULTRASCHALLSCHWEISSEN**
ULTRASONIC WELDING DEVICE AND METHOD FOR ULTRASONIC WELDING
DISPOSITIF DE SOUDAGE PAR ULTRASONS ET PROCÉDÉ DE SOUDAGE PAR ULTRASONS

(30) Priorität: 06.02.2015 DE 202015000879 U; 23.04.2015 DE 102015106265
(43) Veröffentlichungstag der Anmeldung: 13.12.2017
(73) Patentinhaber: Auto-Kabel Management GmbH, 79688 Hausen i.W. (DE)
(72) Erfinder: BRUNNER, Nicolas, 90360 Petitefontaine (FR); ZUSCHLAG, Dany, 68290 Masevaux (FR)
(74) Vertreter: Cohausz & Florack
(86) Internationale Anmeldenummer: PCT/EP2016/050097
(87) Internationale Veröffentlichungsnummer: WO 2016/124344

(56) Entgegenhaltungen:
- EP-A1- 0 913 246
- DE-A1- 102012 006 641
- DE-C1- 19 833 590
- US-A1- 2006 105 589
- US-A1- 2012 107 546

## Beschreibung

Der Gegenstand betrifft eine Ultraschallschweißvorrichtung sowie ein Verfahren zum Ultraschallschweißen.

Heutzutage existiert eine Vielzahl von unterschiedlichen Schweißverfahren, die sich im Wesentlichen nur durch die Art der Wärmeerzeugung unterscheiden. Die Ultraschallschweißtechnik hat sich hierbei als bewährte Technik zur festen und sicheren Verbindung von Kabeln, Klemmen und Verbindungselementen besonders in Kraftfahrzeugen etabliert.

Beim Ultraschallschweißverfahren werden die von einem Ultraschall-Generator erzeugten elektrischen Schwingungen durch eine Erregungseinheit in mechanische Schwingungen umgewandelt und einem Schweißwerkzeug, der Sonotrode zugeführt. Die Sonotrode leitet die mechanischen Schwingungen an die zu verschweißenden Teile, das Schweißgut weiter, welche zwischen der Sonotrode und einem Gegenstück, dem Amboss angeordnet sind. Durch die Übertragung der Ultraschallschwingungen auf das Schweißgut entsteht wärmeinduzierende intermolekulare Reibung. Über eine von der Sonotrode senkrecht auf das Schweißgut gerichtete Kraft werden die zwischen der Sonotrode und dem Amboss zu verschweißenden Teile an der Schweißstelle fixiert, so dass eine dauerhaft feste und homogene Schweißverbindung entsteht.

Die Ultraschallschweißtechnik zeichnet sich unter anderem durch die geringe Schweißzeit sowie die Ausbildung von festen und dauerhaften Verbindungen der Schweißteile aus.

Ein Problem beim Ultraschallschweißen besteht allerdings dann, wenn in der Nähe der Schweißstelle bewegliche Teile angeordnet sind. Zwar werden die zwischen der Sonotrode und dem Amboss zu verschweißenden Teile durch die senkrecht auf diese gerichtete Kraft der Sonotrode an der Schweißstelle fixiert, allerdings werden andere in der Nähe der Schweißstelle angeordnete bewegliche Teile durch die mechanischen Schwingungen beim Schweißvorgang in ungewollte Bewegungen versetzt. Die induzierten Bewegungen können Translationsbewegungen, Rotationsbewegungen oder Oszillationsbewegungen sein, welche allesamt die Qualität der Schweißverbindung reduzieren und zur Oberflächenbeschädigung bis hin zur Rissbildung führen können.

Durch ein einfaches Niederhalten der beweglichen Teile wird das Problem nicht gelöst, weil in diesem Fall ungewünschte Abdrücke und Kratzer sowohl auf den beweglichen Teilen, als auch auf dem Flachteil und der Auflagefläche hervorgerufen werden.

Besonders anfällig für Oberflächenschäden sind in dieser Hinsicht beschichtete Werkstücke, wie für einen Korrosionsschutz häufig eingesetzte verzinnte Oberflächen.

Die Veröffentlichung EP 0 913 246 A1 bezieht sich auf ein Verfahren zum Schmelzkleben eines harten Harzprodukts auf ein Substrat, das aus einem Silizium enthaltenden Material besteht, eine Vorrichtung zur Durchführung dieses Verfahrens, ein Verfahren zur Herstellung eines Fensterglases, bei dem ein hartes Harzprodukt auf ein Glassubstrat schmelzgeklebt wird, und ein Fensterglas, das gemäß diesem Verfahren hergestellt wird.

Die Veröffentlichung US 2006/105589 A1 betrifft Fensterscheiben für Fahrzeuge und ein Verfahren zum Verbinden eines elektrischen Steckers mit einem elektrischen Leiter, der an der Fensterscheibe angebracht ist.

Die Veröffentlichung US 2012/107546 A1 betrifft Verfahren zum Halten und Einschließen einer Schicht aus schwingungsdämpfendem Material gegen einen ausgewählten Oberflächenbereich eines schwingungsfähigen Metallgegenstandes, um mechanische Schwingungen zu reduzieren, die durch den Gegenstand erzeugt oder übertragen werden, indem eine Coulomb-Dämpfung und/oder eine viskose Dämpfung zumindest des angrenzenden Teils des Gegenstandes bewirkt wird

Die Veröffentlichung DE 10 2012 006641 A1 betrifft ein Kabelanschlusselement sowie ein Verfahren zur Herstellung eines solchen Kabelanschlusselements.

Die Veröffentlichung DE 198 33 590 C betrifft ein Verfahren zur Verschweißung eines ausgedehnten optischen Bauteils an eine Metallbefestigung, Verwendung und eine optische Baugruppe.

Ausgehend von diesem Stand der Technik lag der Anmeldung die Aufgabe zugrunde, eine Vorrichtung und ein Verfahren für das Ultraschallschweißen zur Verfügung zu stellen, welche die durch das Schweißen induzierten Bewegungen möglichst materialschonend reduziert. Darüber hinaus soll die Vorrichtung möglichst einfach auf schon existierende Systeme nachrüstbar sein.

Diese Aufgabe wird gegenständlich nach Anspruch 1 und Anspruch 3 gelöst.

Bei einer Ultraschallschweißvorrichtung kann zwischen der Sonotrode und dem Amboss das zu verschweißende Schweißgut angeordnet sein. Vorliegend wird ein Flachteil mit einem Fügeteil oder mit einem Anschlussteil, beispielsweise einer Kabelseele, insbesondere Litzen eines Kabels mittels Ultraschallschweißen (USS) verschweißt.

Beim USS werden in das Flachteil Schwingungen eingebracht. Diese Schwingungen können sich über das Flachteil ausbreiten und insbesondere auf an dem Flachteil angeordnete Bauteile, insbesondere Befestigungsteile, übertragen werden. Diese nicht fest mit dem Flachteil verbundenen Teile beginnen ebenfalls an zu schwingen und es können sich durch die dadurch auftretenden Vibrationen Beschädigungen an den Oberflächen der Teile ergeben.

Dabei kann ein Befestigungselement auf einem Flachteil angeordnet und insbesondere zwischen dem Flachteil und einem Fügeteil formschlüssig gehalten sein. Das Befestigungselement kann aber auch ohne das Fügeteil verliersicher an dem Flachteil angeordnet sein, z.B. durch ein geeignetes Verpressen oder dergleichen. Ein an dem Befestigungselement während des USS anliegendes Dämpfungselement kann gegenständlich derart angeordnet sein, dass eine Relativbewegung zwischen dem Befestigungselement und dem Flachteil und/oder dem Fügeteil beim Ultraschallschweißen eingeschränkt, vorzugsweise unterbunden ist.

Gegenständlich wird das Befestigungselement mit Hilfe zumindest eines Dämpfungselement, welches an der USS Vorrichtung angeordnet ist, gegen das Flachteil gepresst. Durch den Anpressdruck wird einerseits das Befestigungselement an dem Flachteil abgestützt, so dass Vibrationen durch das USS in dem Befestigungselement verringert, vorzugsweise verhindert werden. Zusätzlich wird durch den Anpressdruck das Befestigungselement so gegen das Flachteil gepresst, dass das Flachteil durch den Anpressdruck elastisch verformt wird. Die Dehnung in Richtung der Anpresskraft ist dabei vorzugsweise zwischen 0,5 und 1%. Durch diese Dehnung wird das Flachteil gedämpft, so dass die durch das USS eingeprägte Schwingung in dem Flachteil selbst gedämpft wird.

Auch relevant für die Qualität von Ultraschallschweißprozessen ist die Ausgestaltung der Sonotrode. Diese kann aus verschiedenen Materialien gefertigt werden. Vorzugsweise können Sonotroden aus Aluminium, Titan oder Stahl eingesetzt werden, es können jedoch auch andere geeignete Materialien verwendet werden. Auch die Bauformen der Sonotroden können sich deutlich unterscheiden, sie können beispielsweise rechteckig, abgerundet, konisch, oder zylindrisch geformt sein. Vorzugsweise ist die Arbeitsfläche der Sonotrode möglichst gleichmäßig geformt, weil nur diese in direkten Kontakt mit dem Schweißteil kommt und Abdrücke auf Bauteilen vermieden werden sollen. Die von der Sonotrode zur Verschweißung der Schweißteile weitergeleitete mechanische Schwingung kann sowohl senkrecht, als auch parallel zu den zu verschweißenden Teilen verlaufen.

Eine Einschränkung der Bewegung des Befestigungselementes und des Flachteils und/oder Fügeteils kann bedeuten, dass das Befestigungselement gegenüber dem Flachteil und/oder dem Fügeteil nur noch geringfügige translatorische, rotatorische und vibratorische Bewegungen ausführen kann. Solche Translationsbewegungen können hier vorzugsweise eine Bewegung von zumindest weniger als 5 mm entlang der Berührflächen zwischen dem Befestigungselement und dem Flachteil und/oder dem Fügeteil, vorzugsweise weniger als 1 mm, besonders bevorzugt weniger als 0,2 mm bedeuten. Solche Rotationsbewegungen können eine Rotation um vorzugsweise weniger als 5 ° um die Achse senkrecht zur Berührfläche zwischen dem Befestigungselement und dem Flachteil und/oder dem Fügeteil, vorzugsweise weniger als 1°, besonders bevorzugt weniger als 0,2 ° bedeuten. Solche Vibrationsbewegungen können eine Auslenkung senkrecht zur Berührfläche zwischen dem Befestigungselement und dem Flachteil und/oder dem Fügeteil von weniger als 5 mm, vorzugsweise weniger als 1 mm, besonders bevorzugt weniger als 0,2 mm bedeuten.

Durch die Einschränkung der Bewegung des Befestigungselementes gegenüber dem Flachteil und/oder dem Fügeteil wird verhindert, dass die Oberfläche des Flachteils beschädigt wird. Die Qualität der Schweißverbindung kann optimiert werden. Besonders an Schweißverbindungen bei in Kraftfahrzeugen verwendeten Kabeln, Klemmen oder Verbindungselementen wird eine hohe Anforderung hinsichtlich ihrer Stabilität und Haltbarkeit gestellt. So sollen Schweißverbindungen in Kraftfahrzeugen möglichst über die gesamte Lebensdauer des Fahrzeugs hinweg funktionieren. Durch die Dämpfung des Flachteils durch eine elastische Verformung verursacht durch den Anpressdruck des Dämpfungselements ist das Flachteil selbst gedämpft und an einer Schweißstelle im Bereich des Flachteils ist ein Schweißprozess optimiert.

Ein formschlüssiges Halten des Befestigungselementes zwischen dem Flachteil und dem Fügeteil ist besonders vorteilhaft bei der Ausbildung einer stoffschlüssigen Verbindung zwischen dem Fügeteil und dem Flachteil, bei der das Fügeteil die Aufgabe hat, das Befestigungselement in seiner Position zu halten. So kann das Befestigungselement beispielsweise nicht verrutschen, während das Fügeteil mit dem Flachteil per Ultraschallschweißen verbunden wird. Auch kann verhindert werden, dass beim Verschweißen des Flachteils mit einem Kabel per USS das Befestigungselement gegenüber dem Flachteil vibriert.

Gemäß einem Ausführungsbeispiel wird vorgeschlagen, dass Befestigungselement freilaufend an dem Flachteil gehalten ist. Ein freilaufendes Halten kann in diesem Sinne bedeuten, dass das Befestigungselement zwar gehalten wird, sich aber dennoch um seine Längsachse drehen kann. Dadurch ist es beispielsweise im Falle einer Mutter als Befestigungselement möglich, dass diese trotz des freilaufenden Haltens mit einer Schraube verschraubt werden kann, indem sich die Mutter um ihre Längsachse dreht.

Das freilaufende Halten kann dadurch erreicht werden, dass das Befestigungselement eine Falz in einer Bohrung des Flachteils auf der einen Seite radial hintergreift und auf der anderen Seite mit einem Kopf bzw. Flansch an der Oberfläche des Flachteils im Bereich des Umfangs der Bohrung anliegt.

Auch kann das Fügeteil das Befestigungselement teilweise oder auch vollständig umgreifen. Das Fügeteil kann als eine Art Befestigungsring ausgeführt sein der das Befestigungselement zumindest in Teilen umgreift. Der Befestigungsring kann beispielsweise so ausgeführt sein, dass das Befestigungselement nur teilweise umgriffen ist, ebenso kann er das Befestigungselement vollständig umgreifen. Bei dem Fügeteil kann es sich auch um eine Art Befestigungsnuß handeln, die das Befestigungselement vollständig umschließt anstatt nur umgreift. Das Fügeteil ist vorzugsweise metallisch gebildet, kann aber auch aus einem nichtmetallischen Material, beispielsweise einem Kunststoff gebildet sein.

Gemäß einem Ausführungsbeispiel wird vorgeschlagen, das Befestigungselement von zwei Fügeteilen freilaufend zu halten. Durch das Halten mit Hilfe von zwei Fügeteilen wird eine größere Flexibilität hinsichtlich der Anordnung der Fügeteile gewährleistet. So kann ein Befestigungselement auch von zwei winkelartig geformten, auf dem Flachteil fixierten Fügeteilen gehalten werden. Die Fixierung der winkelartig geformten Fügeteile könnte besonders einfach bei der Verwendung von z-förmigen Fügeteilen erfolgen, indem die auf dem Flachteil aufliegende Fläche des z-förmigen Fügeteils per Ultraschallschweißverfahren mit dem Flachteil stoffschlüssig verbunden wird. Der gewünschte Freilauf des Befestigungselementes kann allerdings eine teilkreisförmige Ausgestaltung des oberen Kragens des z-haltewinkelartig geformten Fügeteils erfordern. Denkbar ist neben einer Anordnung von zwei Fügeteilen auch eine Anordnung von drei und mehr Fügeteilen zum Halten des Befestigungselementes.

Denkbar wäre darüber hinaus auch eine Anordnung, bei der ein oder mehr Fügeteile nicht per Ultraschallschweißverfahren, sondern in einer anderen Weise an dem Flachteil stoffschlüssig, formschlüssig und/oder kraftschlüssig fixiert werden können. So können beispielsweise ein oder mehrere Fügeteile ein Befestigungselement formschlüssig halten, indem sie auf das Flachteil geklebt, verschraubt, genietet oder gelötet sind.

Auch wird vorgeschlagen, dass das Flachteil an einem ersten Ende mit einem Anschlussteil, z.B. mit einem Kabel bzw. einer Kabelseele, bzw. Litzen eines Kabels mittels USS verschweißt wird. Gleichzeitig wird mit Hilfe der USS Vorrichtung das Befestigungselement an das Flachteil gedrückt. Hierzu ist an der USS ein Haltearm vorgesehen, an dem das Dämpfungselement angeordnet ist. Mittels des Haltearms wird das Dämpfungselement axial in Richtung des Befestigungselements gedrückt.

Eine der Berührflächen zwischen der Sonotrode und des zumindest einen Fügeteils oder einem an dem Flachteil anzuschweißenden Anschlussteil ist räumlich entfernt von dem Befestigungselement angeordnet ist. Somit kann entfernt von der Sonotrode das Befestigungselement an dem Flachteil angeordnet sein. Schwingungen durch die Sonotrode werden durch das Flachteil geleitet. Mit Hilfe des gegenständlichen Dämpfungselementes ist es möglich, diese Schwingungen weitestgehen abzudämpfen, so dass das Befestigungselement gegenüber dem Flachteil möglichst wenig vibriert.

An der USS Vorrichtung sind zumindest zwei vorzugsweise linear zueinander bewegliche Seitenschieber angeordnet. Mittels der Seitenschieber kann das Flachteil fixiert werden, in dem es zwischen den Seitenschieber verklemmt wird. Das Flachteil ragt vorzugsweise beidseitig der Seitenschieber hervor. Auf der einen Seite kann das Flachteil mit einem Kabel mittels USS verschweißt werden. Auf der anderen Seite der Seitenschieber kann das Flachteil mit dem Befestigungselement herausragen. Das Befestigungselement kann bei Einlegen in die USS mittels einer Führung, die an dem Befestigungselement eingreift, geführt werden, so dass das Flachteil mit dem Befestigungselement an den Seitenschiebern ausgerichtet wird. Nach dem Verklemmen ist das Flachteil zwischen den Seitenschieber zum USS gehalten.

An einem der der Seitenschieber kann ein Haltearm angeordnet sein. Während die Seitenschieber linear auf das Flachteil zu bewegt werden, kann hingegen der Haltearm winklig dazu, insbesondere normal dazu, auf die Oberfläche des Flachteils zu bewegt werden. Hierdurch kann ein am dem Haltearm angeordnetes Dämpfungselement auf das Befestigungselement zu bewegt werden. Mit Hilfe eines geeigneten Anpressdrucks kann das Dämpfungselement gegen das Befestigungselement gedrückt werden. Hierdurch wird die Vibration des Befestigungselements im wesentlichen unterdrückt. Gleichzeitig kann bei einem geeigneten Anpressdruck das Flachteil elastisch verformt werden. Durch diese Verformung kann die Schwingung durch das USS auch in dem Flachteil selbst gedämpft werden. Auf der dem ersten Dämpfungselement axial gegenüberliegenden Seite des Befestigungselements kann ein zweites Dämpfungselement vorgesehen sein. Diese liegt vorzugsweise nur an dem Flachteil, nicht aber unmittelbar an dem Befestigungselement an. Das Befestigungselement wird zusammen mit dem Flachteil dann zwischen den beiden Dämpfungselementen verpresst. Dies führt zu einer optimalen Dämpfung und gleichzeitig einem mechanischen Schutz des Flachteils auf der Seite des zweiten Dämpfungselements.

Das zumindest eine Dämpfungselement ist an einer dem Befestigungselement zugewandten Seite des Haltearms angeordnet ist. Somit kann das erste Dämpfungselement gegen das Befestigungselement gedrückt werden.

Ein zweites Dämpfungselement kann an einer dem Flachteil zugewandten Fläche des Ambosses angeordnet sein. Der Amboss kann dabei als die Auflagefläche des Flachteils an der USS verstanden sein. Der Amboss ist nicht nur der der Sonotrode gegenüberliegende Teil des USS Vorrichtung, sondern wird hier breiter verstanden. Auf der Seite, auf der das Flachteil auf der USS Vorrichtung aufliegt, bzw. auf der dem Befestigungselement abgewandten Seite des Flachteils ist gegenständlich der Amboss angeordnet. Auf dieser Seite ist das zweite Dämpfungselement vorgesehen. Es wird zwischen dem Flachteil und dem Amboss eingespannt. Vorzugsweise ist das zweite Dämpfungselement zwischen der Führung für das Befestigungselement und dem Amboss eingespannt sein. Die Führung für das Befestigungselement kann auch als Halteeinheit verstanden werden.

Vorzugsweise liegt das erste Dämpfungselement beim USS unmittelbar an oder auf dem Befestigungselement auf. Dabei ist das zweite Dämpfungselement vorzugsweise an dem Flachteil angeordnet ist. Insbesondere ist das zweite Dämpfungselement beabstandet von dem Befestigungselement. Somit kommt es beim USS zu keiner Berührung zwischen dem zweiten Dämpfungselement und dem Befestigungselement.

Dadurch, dass der Haltearm in Richtung des Befestigungselement beweglich ist, kann das das Dämpfungselement mit einem Hub von wenigsten 0,1 mm, vorzugsweise zwischen 0,5mm und 5 mm, insbesondere in etwa 1mm, 2mm, 3mm, 4mm oder 5m elastisch verformend auf das Befestigungselement gedrückt werden. Abhängig von der Elastizität des Dämpfungselements kann der Hub derart eingestellt werden, dass das Befestigungselement mit einer ausreichenden Kraft gegen das Flachteil gedrückt wird.

Der Haltearm drückt das erste Dämpfungselement vorzugsweise mit einem Anpressdruck von zumindest 0,1bar, vorzugsweise zumindest 1bar, insbesondere zwischen 1 bar und 6bar, vorzugsweise zwischen 3 bar und 6bar gegen das Befestigungselement. Ja nach Anpressdruck ergeben sich andere elastische Verformungen des Flachteils und die Dämpfung der USS Schwingung kann variiert werden.

Besonders einfach lässt sich das Dämpfungselement an dem Haltearm positionieren, wenn das erste Dämpfungselement mit einer Übergangspassung oder einer Presspassung an dem Haltearm, insbesondere in einem Sackloch in dem Haltearm angeordnet ist.

Wie bereits erwähnt, lassen sich Schwingungen durch das USS in dem Flachteil dann dämpfen, wenn der Haltearm das Dämpfungselement derart gegen das Befestigungselement drückt, dass das Flachteil elastisch verformt wird.

Zumindest eines der Dämpfungselemente kann aus einem elastischen Material, insbesondere einem Elastomer, insbesondere einem Polyurethan gebildet sein. Das Material hat vorzugsweise eine Härtegrad zwischen 40 und 120 Shore, insbesondere zwischen 60 und 100 Shore, vorzugsweise in etwa 80 Shore, vorzugsweise nach DIN EN ISO 868 und/oder DIN ISO 7619-1. Das Dämpfungselement hat vorzugsweise ein Schubmodul von 10 - 500 M Pa bei Raumtemperatur. Hierdurch werden besonders gute Dämpfungseigenschaften für Schwingungen im Ultraschallbereich erreicht.

Gemäß einem Ausführungsbeispiel ist die Sonotrode seitlich von dem Befestigungselement angeordnet. Insbesondere ist hierbei zumindest eine der Berührflächen der Sonotrode und des zumindest einen Fügeteils oder des Kabels seitlich von dem Befestigungselement angeordnet. Bei einer Ausführung in der zumindest ein Fügeteil das Befestigungselement formschlüssig hält, während das Fügeteil per Ultraschallschweißverfahren stoffschlüssig mit dem Flachteil verbunden wird, ist es vorteilhaft, wenn das Befestigungselement seitlich von der Sonotrode angeordnet ist. Somit ist ausreichend Platz für die Bildung einer Schweißverbindung zwischen Flachteil und Fügeteil vorhanden. Ist die Bildung von zwei Schweißverbindungen zur Fixierung des Fügeteils auf dem Flachteil gewünscht, wäre eine Umpositionierung der Sonotrode oder des Werkstücks für die Bildung der zweiten Schweißverbindung denkbar. Andernfalls wäre auch die Verwendung einer speziell U-förmig geformten Sonotrode denkbar, bei der zwei Schweißverbindungsstellen zwischen zumindest einem Fügeteil und dem Flachteil gleichzeitig gebildet werden können. In diesem Fall befände sich das Befestigungselement bei der Bildung der stoffschlüssigen Verbindung zwischen Flachteil und zumindest eines Fügeteils vorzugsweise zwischen den beiden Kontaktstellen der Sonotrode mit dem Fügeteil.

Das Befestigungselement kann ein Drehbefestigungselement, insbesondere eine Schraube, eine Mutter, ein Steck-Dreh-Verschluss oder ein Bajonettverschluss sein. Das Befestigungselement kann zum Anschluss eines Befestigungsmittels dienen, beispielsweise kann eine Mutter als Befestigungselement für den Anschluss einer Schraube, und umgekehrt dienen. So können in besonders einfacher Weise verschiedene Verbindungselemente miteinander verbunden werden. Das Befestigungselement kann aus Metall, vorzugsweise aus Kupfer oder einer seiner Legierungen gebildet sein. Insbesondere ist das Drehbefestigungselement ein geschmiedetes oder kalt verformtes Teil.

Gemäß einem Ausführungsbeispiel besitzt das Befestigungselement einen radial nach außen weisenden Kragen. Dabei kann der Kragen teilweise oder auch vollständig umlaufend gebildet sein. Ein an dem Befestigungselement radial nach außen weisender Kragen vereinfacht den Aufbau und die Form der verwendeten Fügeelemente und ermöglicht ein gleichzeitig formschlüssiges und freilaufendes Halten des Befestigungselementes zwischen Fügeteil und Flachteil.

Gemäß einem Ausführungsbeispiel hat das Befestigungselement einen sich axial erstreckenden Kragen, welcher in einer Bohrung in dem Flachteil angeordnet ist. Dieser Kragen wird an seinem axialen Ende nach außen gebogen, so dass er in einer Falz im Bereich des Umfangs der Bohrung, insbesondere einer umlaufenden Falz angeordnet ist. Hierdurch wird das Befestigungselement verliersicher an dem Flachteil gehalten, bleibt jedoch verdrehbar in der Bohrung, wenn der Kragen in Spielpassung in die Falz gebogen ist.

Gemäß einem vorteilhaften Ausführungsbeispiel ist das Flachteil als Kabelanschlusselement ausgebildet. Das Kabelanschlusselement kann vorzugsweise ein Kabelschuh sein, insbesondere ein Reibschweißkabelschuh, Crimpkabelschuh oder Ultraschweißkabelschuh. Kabelanschlusselemente, insbesondere Kabelschuhe bieten sich für eine einfache und sichere Verbindung von Kabeln besonders in Kraftfahrzeugen an. Vorzugsweise kann ein Kabel, insbesondere die Litzen bzw. die Seele des Kabels mittels USS an dem Flachteil befestigt werden. Im Bereich des Flachteils ist der Kabelschuh bevorzugt metallisch, aus Kupfer oder einer Kupferlegierung sowie Aluminium oder einer Aluminiumlegierung gebildet. In besonderen Ausführungsformen ist es allerdings auch möglich, dass das Flachteil aus einem nichtmetallischen Material geformt ist. An dem Flachteil des Kabelschuhs befindet sich ein zwischen dem Flachteil und zumindest einem Fügeteil formschlüssig gehaltenes Befestigungselement. Das Befestigungselement kann aus Kupfer oder einer Kupferlegierung sowie Aluminium oder einer Aluminiumlegierung gebildet sein. Das Befestigungselement kann z.B. beschichtet sein, insbesondere vernickelt und/oder verzinnt. Das Befestigungselement kann ein Drehbefestigungselement, insbesondere eine Schraube, eine Mutter, ein Steck-Dreh-Verschluss oder ein Bajonettverschluss sein. Das Befestigungselement kann zum Anschluss eines Befestigungsmittels dienen.

Gemäß einem Ausführungsbeispiel wird vorgeschlagen, dass eine Halterungseinheit das Flachteil formschlüssig zwischen Sonotrode und Amboss hält. Hierbei umfasst die Halterungseinheit das Flachteil vorzugsweise von drei Seiten und weist eine zum Flachteil komplementäre Struktur auf. Die Halterungseinheit ist vorzugsweise ein aus Metall gebildetes, vorzugsweise geschmiedetes oder kalt verformtes Bauteil. In einer Ausführungsform, in der die Halterungseinheit einen U-förmigen Kabelschuh von drei Seiten formschlüssig zwischen der Sonotrode und dem Amboss hält, hat die Halterungseinheit als komplementäre Struktur vorzugsweise eine U-förmige Aussparung. In diese Aussparung kann beispielsweise ein Kabelschuh eingelegt und formschlüssig gehalten werden. Das ist besonders vorteilhaft, wenn auf dem Kabelschuh Arbeiten, wie beispielsweise das stoffschlüssige Verbinden von Teilen mittels Ultraschallschweißen, durchgeführt werden. Ein besonders stabiles Aufliegen der Halterungseinheit ist dann gegeben, wenn die U-förmige Aussparung im wesentlichen, vorzugsweise exakt entlang der Hauptträgheitsachse des Bauteils verläuft. Die Halterungseinheit ist vorzugsweise als Führung gebildet. Das Flachteil zusammen mit dem Befestigungselement lässt sich vor dem USS mittel der Halterungseinheit an der USS Vorrichtung ausrichten. Anschließend wird mittels zweiter Seitenschieber das Flachteil an der USS Vorrichtung, im ausgerichteten Zustand, fixiert.

Die Halterungseinheit kann formschlüssig auf dem Amboss angeordnet sein, vorzugsweise auf dem Amboss fixiert sein. Eine Fixierung zur Stabilisierung der Halterungseinheit auf dem Amboss kann beispielsweise über zumindest ein Loch in der Halterungseinheit bewirkt werden. Die Fixierung kann dann über Schrauben, Gewindestangen, Bolzen oder Dübel erfolgen. Korrespondierende Gewinde oder Löcher können sich dann entsprechend in dem Amboss befinden. Vorzugsweise erfolgt die Fixierung über zumindest zwei Löcher, die symmetrisch zur U-förmigen Aussparung angeordnet sein können.

Um die Bewegungen des Befestigungselementes gegenüber dem Flachteil und/oder dem Fügeteil einzuschränken, wird vorgeschlagen, ein Dämpfungselement an dem, vorzugsweise auf dem Befestigungselement anzuordnen. Eine Anordnung des Dämpfungselementes direkt auf dem Befestigungselement bedeutet hier, unmittelbar an einer dem Befestigungselement zugewandten Fläche angeordnet zu sein. Auf diese Weise kann die größtmögliche Einschränkung der Bewegung des Befestigungselementes gegenüber dem Flachteil und/oder dem Fügeteil erfolgen. Vorzugsweise besitzt das Dämpfungselement zusätzlich eine möglichst ähnliche Form wie die an das Dämpfungselement angrenzende Fläche des Befestigungselementes. So wäre für eine Mutter als Befestigungselement eine zylindrische Form mit einem Außendurchmesser ähnlich dem Außendurchmesser des Kopfes der Mutter ideal.

Gemäß einem vorteilhaften Ausführungsbeispiel wird vorgeschlagen, dass ein zweites Dämpfungselement an einer dem Flachteil zugewandten Fläche des Ambosses angeordnet ist, vorzugsweise zwischen dem Amboss und dem Flachteil, insbesondere auf einer dem ersten Dämpfungselement abgewandten Seite des Flachteils. Wäre zwischen dem Flachteil und dem Amboss gar kein Dämpfungselement vorhanden, könnte die Oberfläche des Flachteils im Bereich der Kontaktfläche mit dem Amboss beim Ultraschallschweißen beschädigt werden.

Gemäß einem Ausführungsbeispiel kann zumindest eines der Dämpfungselemente aus einem elastischen Material, insbesondere aus Polyurethan gebildet sein. Neben Polyurethanen wären auch andere elastische Materialien mit guten Dämpfungseigenschaften wie Gummi oder Kunststoffschäume verwendbar.

In einer vorteilhaften Ausführungsform kann an der Ultraschallschweißvorrichtung ein Haltearm angeordnet sein. Vorzugsweise kann der Haltearm derart angeordnet sein, dass durch eine von dem Haltearm ausgeübte Kraft eine Relativbewegung zwischen dem Befestigungselement und dem Flachteil und/oder Fügeteil beim Ultraschallschweißen eingeschränkt ist. Vorteilhafterweise wird die Kraft möglichst senkrecht zur Oberfläche des Dämpfungselementes aufgewendet. Eine möglichst senkrecht zur Oberfläche des Dämpfungselementes ausgerichtete Kraft offenbart in diesem Fall eine effiziente Art der Kraftübertragung. Der Haltearm ist darüber hinaus vorzugsweise neben der Sonotrode angeordnet. Es ist hierbei einerseits möglich, dass der Haltearm als Anbauteil an einem Seitenschieber separat neben der Sonotrode angeordnet ist und durch Kraftübertragung auf das Dämpfungselement eine Relativbewegung zwischen dem Befestigungselement und dem Flachteil und/oder Fügeteil beim Ultraschallschweißen einschränkt.

Ein weiterer Gegenstand ist ein Verfahren zum Ultraschallschweißen, bei dem ein Befestigungselement verliersicher an einem Flachteil angeordnet wird, ein Dämpfungselement derart an dem Befestigungselement angelegt wird, dass eine Relativbewegung zwischen dem Befestigungselement und dem Flachteil beim anschließenden Ultraschallschweißen eingeschränkt wird. Vorzugsweise wird das Befestigungselement über eine von einem Haltearm senkrecht auf das Dämpfungselement ausgeübte Kraft in seiner Relativbewegung zu dem Flachteil und/oder dem Fügeteil eingeschränkt.

Nachfolgend wird der Gegenstand anhand Ausführungsbeispiele zeigenden Zeichnungen näher erläutert. In der Zeichnung zeigen:
- Fig. 1a: eine Explosionsdarstellung einer gegenständlichen Anordnung eines Fügeteils, eines Befestigungselementes und eines Flachteils;
- Fig. 1b: die gegenständliche Anordnung eines Fügeteils, eines Befestigungselementes und eines Flachteils nach Fig. 1y im zusammengebauten Zustand;
- Fig. 2a: eine Explosionsdarstellung einer alternativen Ausführungsform der gegenständlichen Anordnung aus Fig. 1a mit der Verwendung von zwei Fügeteilen;
- Fig. 2b: die gegenständliche Anordnung der alternativen Ausführungsform nach Fig. 2a im zusammengebauten Zustand;
- Fig. 3a: eine Schnittdarstellung einer alternativen Ausführungsform der gegenständlichen Anordnung mit einer gefangenen Mutter;
- Fig. 3b: eine Schnittdarstellung der gegenständlichen Anordnung der alternativen Ausführungsform nach Fig. 3a im zusammengebauten Zustand;
- Fig. 4: Halterungseinheit in perspektivischer Darstellung;
- Fig. 5: Oberes Dämpfungselement in perspektivischer Darstellung;
- Fig. 6: Unteres Dämpfungselement in perspektivischer Darstellung;
- Fig. 7: Schnittdarstellung einer Anordnung eines formschlüssig gehaltenen Befestigungselementes mit seitlich angeordneter Sonotrode am Beispiel einer Mutter als Befestigungselement;
- Fig. 8: Schnittdarstellung einer Anordnung eines formschlüssig gehaltenen Befestigungselementes mit einer an einem Haltearm angeordneten U-förmigen Sonotrode am Beispiel einer Schraube als Befestigungselement;
- Fig. 9: Schnittdarstellung einer Anordnung eines formschlüssig gehaltenen Befestigungselementes am Beispiel eines Bajonettverschlusses als Befestigungselement mit einer an einem Haltearm angeordneten U-förmigen Sonotrode;
- Fig. 10: Perspektivische Darstellung einer Anordnung eines formschlüssig gehaltenen Befestigungselementes mit einer an einem Haltearm angeordneten U-förmigen Sonotrode;
- Fig. 11: Schnittdarstellung einer Anordnung eines Befestigungselementes mit einem an einem Haltearm angeordneten Dämpfungselement;
- Fig. 12: Perspektivische Darstellung einer Anordnung eines Befestigungselementes mit einem an einem Haltearm angeordneten Dämpfungselement;

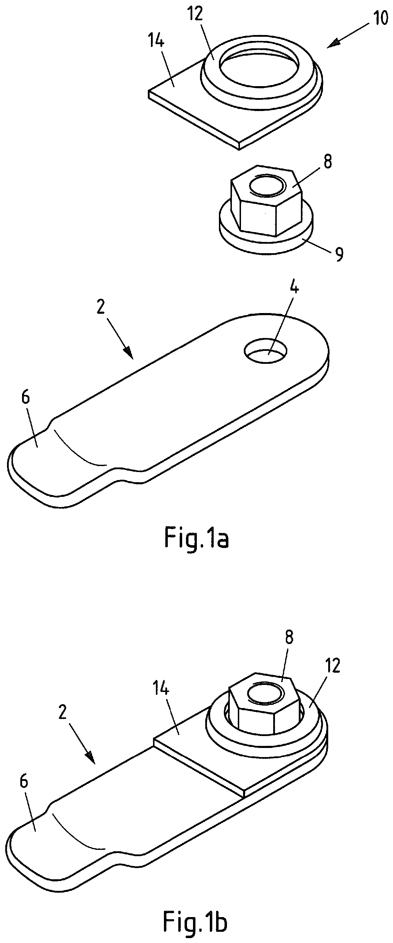

Fig. 1a zeigt eine gegenständliche Anordnung eines Fügeteils 10, eines Befestigungselementes 8 und eines Flachteils 2. Das Flachteil 2 weist eine an einem Ende angeordnete Mulde 6 sowie eine Durchgangsöffnung 4 auf. Als Beispiel eines Befestigungselementes 8 ist eine Mutter dargestellt, welche einen radial nach außen weisenden Kragen 9 aufweist. Das Fügeteil 10 hat eine Anschlussfläche 14 sowie einen neben der Anschlussfläche 14 angeordneten Befestigungsring 12.

Das Befestigungselement 8 kann zwischen dem Flachteil 2 und dem Fügeteil 10 formschlüssig angeordnet sein. Hierbei umschließt der Befestigungsring 12 des Fügeteils den umlaufenden Kragen 9 des Befestigungselementes 8. Für ein gleichzeitig formschlüssiges und drehbares Halten des Befestigungselementes 8 auf dem Flachteil kann der Befestigungsring 12 des Fügeteils und der umlaufende Kragen 9 des Befestigungselementes 8 ein gleiches Profil aufweisen. Auch kann der Außendurchmesser des umlaufenden Kragens 9 größer als der Innendurchmesser des Befestigungsrings 12, aber kleiner als dessen Außendurchmesser sein. Für das Beispiel der formschlüssigen Anordnung einer Mutter auf einem Flachteil 2, insbesondere einem Kabelschuh hat dies den Vorteil, dass die Mutter sich trotz ihrer verliersicheren Befestigung noch um ihre Längsachse drehen kann und somit auch mit einer fest angeordneten Schraube verschraubt werden kann.

Die endständig angeordnete Mulde 6 dient zur Aufnahme einer Isolation eines stirnseitig abisolierten Kabels. Das stirnseitige Ende des abisolierten Kabels kann dann beispielsweise per Ultraschallschweißverfahren mit dem Flachteil 2 verschweißt werden. Vorzugsweise ist beim Verschweißen von Kabeln mit Kabelanschlusselementen darauf zu achten, dass die zu verschweißenden Teile aus denselben Materialien beziehungsweise denselben Elementen bestehen, um Kontaktkorrosionen vorzubeugen. Das Kabel kann dabei beispielsweise aus einem Aluminiumwerkstoff sein und das Flachteil aus einem Kupferwerkstoff, wobei das Flachteil jedoch im Bereich der Verbindungsstelle mit Aluminiumwerkstoff ausgestattet ist, z.B. durch Walzplattieren. Diese Materialkombination kann natürlich auch genau entgegengesetzt sein, also das Kabel aus einem Kupferwerkstoff und das Flachteil aus einem Aluminiumwerkstoff.

Fig. 1b zeigt die gegenständliche Anordnung eines Fügeteils 10, eines Befestigungselementes 8 und eines Flachteils 2 nach Fig. 1a im zusammengebauten Zustand, welcher die formschlüssige Anordnung des Befestigungselementes 8 zwischen dem Flachteil 2 und einem Fügeteil 10 wiedergibt.

Die Anschlussfläche 14 des Fügeteils 10 kann in dieser Anordnung vorzugsweise per Ultraschall-Schweißverfahren mit dem Flachteil 2 verschweißt werden, während das Befestigungselement 8 bereits durch den Befestigungsring 12 des Fügeteils 10 an dem Flachteil 2 gehalten wird.

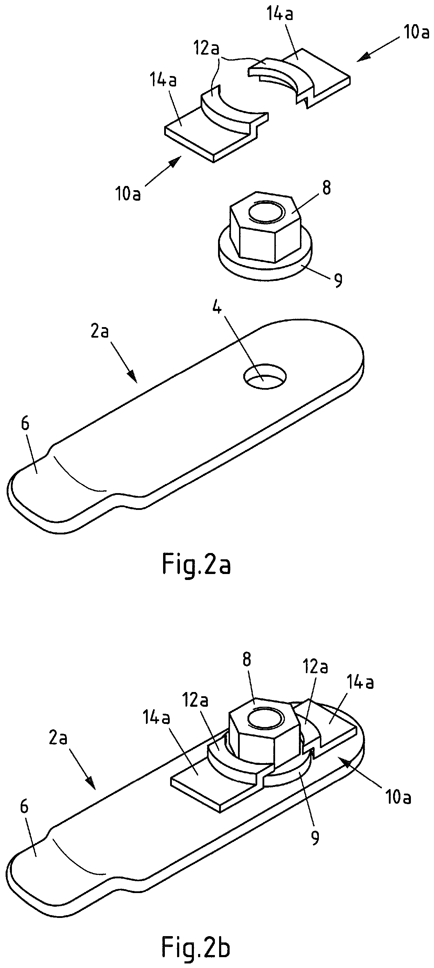

Fig. 2a zeigt eine Explosionsdarstellung einer alternativen Ausführungsform der gegenständlichen Anordnung aus Fig. 1a mit der Verwendung von zwei Fügeteilen 10 a und einem Flachteil 2 a mit verlängertem Abschluss.

Die alternative Ausführungsform der Fügeteile 10 a ist aus einer Anschlussfläche 14 a sowie einem daran angeordneten Befestigungskragen 12 a gebildet. Zur Auflage eines zweiten Fügeteils 10 a besitzt das Flachteil 2 a einen verlängerten Abschluss.

Durch das Halten mit Hilfe von zwei Fügeteilen 10 a wird eine größere Flexibilität hinsichtlich der Anordnung der Fügeteile 10 a gewährleistet. So können unmittelbar neben dem Befestigungselement 8 auch noch andere Elemente auf dem Flachteil 2 a befestigt sein, da das Fügeteil 10 a in dieser Ausführungsform nicht vollständig ringförmig ausgestaltet ist und somit noch Platz für andere Elemente bietet. Dabei ist die Größe und Form der Anschlussfläche 14 a nicht auf die in den Figuren dargestellte Ausführungsform beschränkt. Alternativ können kleinere oder auch größere Anschlussflächen 14 a der Fügeteile 10 a mit anderen Formen verwendet werden. Wichtig ist hierbei nur, dass die Anschlussfläche 14 a der Fügeteile 10 a nicht zu klein ist, um eine stabile stoffschlüssige Verbindung mit dem Flachteil 2 a per Ultraschall-Schweißverfahren herstellen zu können.

Die gewünschte Drehbarkeit des Befestigungselementes 8 erfordert eine kreisteilförmige Ausgestaltung der Befestigungskragen 12 a der Fügeteile 10 a. Denkbar ist neben einer Anordnung von zwei Fügeteilen 10 a auch eine Anordnung von drei und mehr Fügeteilen 10 a zum Halten eines Befestigungselementes 8.

Fig. 2b zeigt die alternative Ausführungsform mit Verwendung von zwei Fügeteilen 10 a und einem Flachteil mit verlängertem Abschluss 2 a gemäß Fig. 2a in zusammengebautem Zustand, welcher die formschlüssige Anordnung des Befestigungselementes 8 zwischen dem Flachteil 2 a und den Fügeteilen 10 a wiedergibt.

Die Anschlussflächen 14 a der Fügeteile 10 a können in dieser Anordnung vorzugsweise per Ultraschall-Schweißverfahren mit dem Flachteil 2 a verschweißt werden, während das Befestigungselement 8 bereits durch die Befestigungskragen 12 a der Fügeteile 10 a an dem Flachteil 2 a gehalten wird.

Dabei kann eine Sonotrode 28 entweder seitlich vom Befestigungselement 8 angeordnet ein Fügeteil 10 a nach dem anderen mit dem Flachteil 2 a verschweißen oder im Falle einer U-förmig gebildeten Sonotrode 28 auch beide Fügeteile 10 a gleichzeitig mit dem Flachteil 2 a verschweißen, wobei das Befestigungselement 8 dann vorzugsweise zwischen der U-förmig gebildeten Sonotrode 28 angeordnet ist.

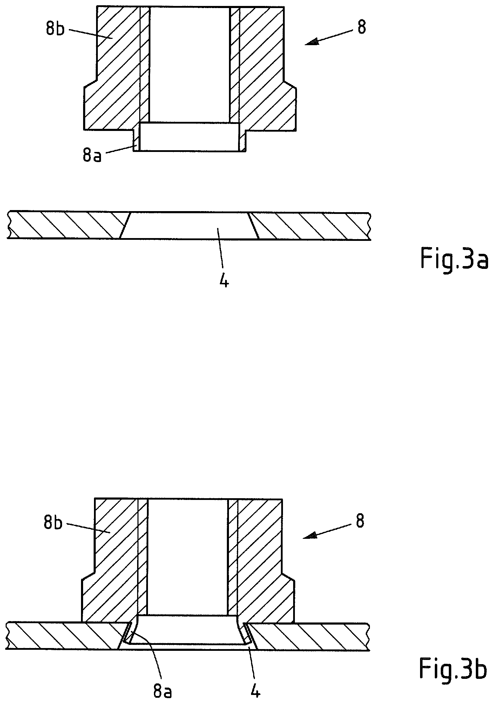

Auch kann das Befestigungselement 8, wie in den Figuren 3a, b gezeigt, als gefangenes Befestigungselement mit einem axial verlaufenden Kragen 8a gebildet sein. In Verlängerung des Kopfes 8b des Befestigungselementes 8 kann sich in axialer Richtung ein Kragen 8a erstrecken. Dieser Kragen 8b hat einen in etwa dem Durchmesser der Bohrung 4 entsprechenden Durchmesser. Insbesondere ist der Durchmesser etwas kleiner, so dass im gefügten Zustand gemäß Fig 3b das Befestigungselement mit Spiel in der Bohrung 4 gelagert ist.

Nachdem der Kragen 8a in die Bohrung 4 eingeführt worden ist, wird der Kragen 8a an seinem stirnseitigen Ende nach außen gebogen. Hierbei bietet es sich an, wenn in der Bohrung 4 eine Falz 4a vorgesehen ist. Der Kragen 8a wird somit in die Falz 5a gebogen. Das Befestigungselement 8 ist somit verliersicher an dem Flachteil 2 gehalten, kann sich jedoch weiterhin in der Bohrung 4 drehen.

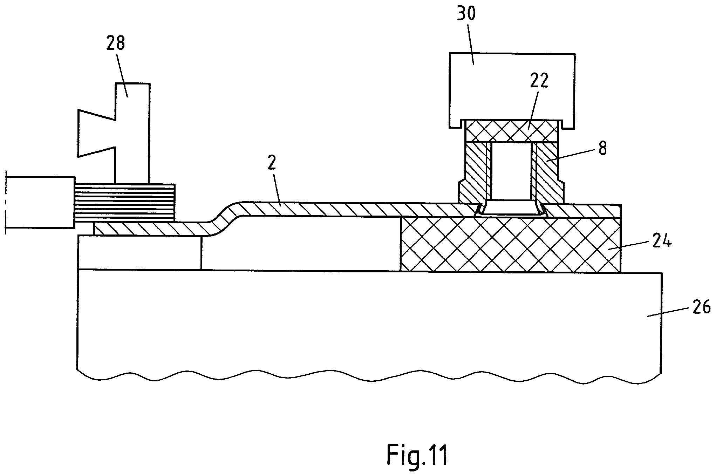

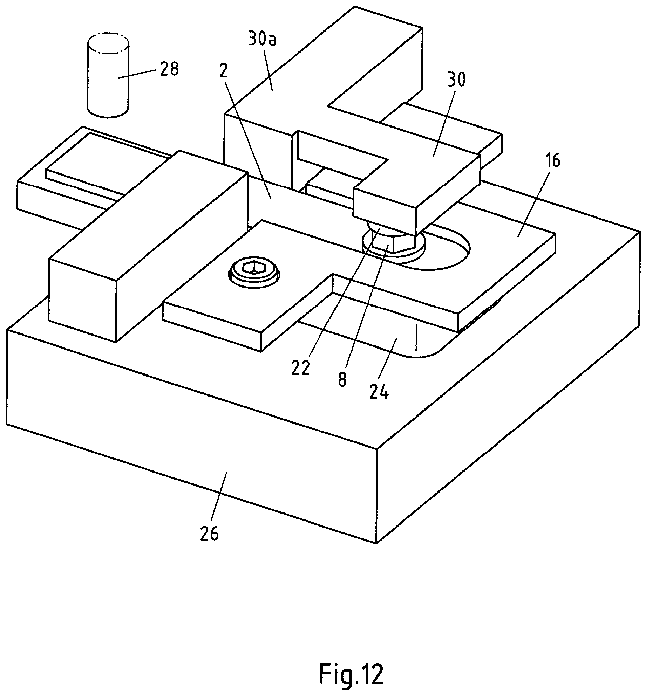

Auch ein solches Flachteil kann mit einem Kabel verschweißt werden, wie in Figuren 11 und 12 gezeigt.

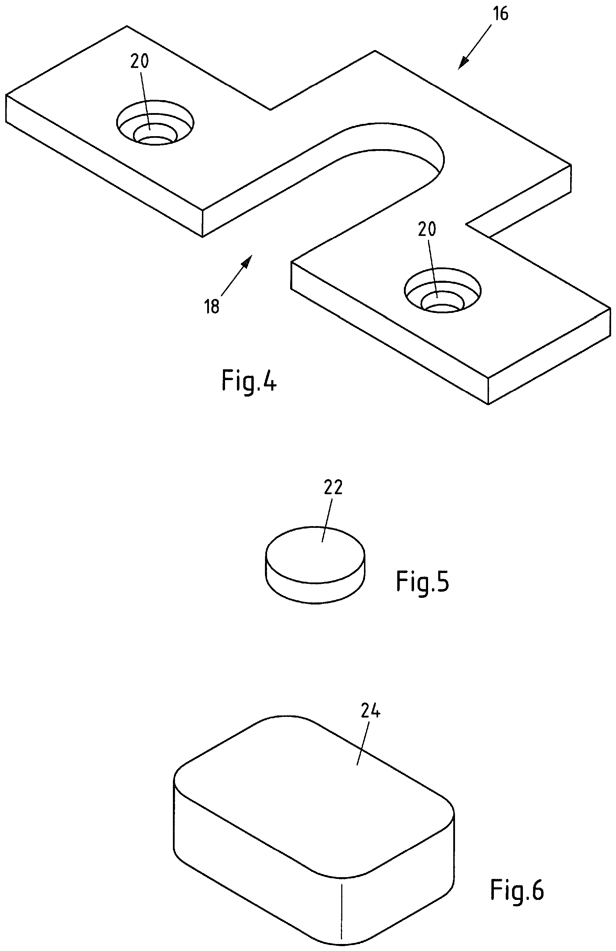

Fig. 4 zeigt eine Halterungseinheit 16 in perspektivischer Darstellung. Symmetrisch zu einer U-förmigen Aussparung 18 sind zwei Löcher 20 angeordnet.

Die Halterungseinheit 16 ist vorzugsweise ein aus Metall gebildetes, geschmiedetes oder kaltverformtes Bauteil. Die U-förmige Aussparung 18 ist vorzugsweise passgenau zu der Form des Befestigungselements 8 oder des Flachteils 2 gebildet, so dass die Halterungseinheit 16 das Befestigungselement 8 oder das Flachteil 2 von drei Seiten formschlüssig hält. Das ist besonders vorteilhaft, wenn auf dem Flachteil 2, 2 a feingliedrige Arbeiten, wie beispielsweise das stoffschlüssige Verbinden von Teilen mittels Ultraschallschweißen, durchgeführt werden. Dann ist eine Ausrichtung des Flachteils 2 zu Sonotrode und Amboss wesentlich. Durch die Halterungseinheit 16 wird das Flachteil 2 vor dem Verschweißen exakt positioniert.

In einer Ausführungsform ist das Flachteil 2 als Kabelschuh gebildet, der von der Halterungseinheit 16 und/oder von Seitenschieber vorzugsweise von drei Seiten formschlüssig gehalten und zu der Sonotrode 28 und dem Amboss 26 positioniert wird, während Fügeteile 2, 2 a oder Kabelenden mittels Ultraschallschweißen auf dem Kabelschuh befestigt werden.

Die Aussparung 18 ist nicht auf eine U-Form beschränkt, es können auch anders geformte Aussparungen in der Halterungseinheit 16 vorliegen. Wichtig ist, dass die Halterungseinheit 16 eine zum Flachteil 2, 2 a oder dem Befestigungselement 8, insbesondere dem Durchmesser des Kopfes 8a des Befestigungselements 8 komplementäre Struktur aufweist.

Für eine stabilere Anordnung kann die Halterungseinheit 16 auch auf dem Amboss 26 fixiert sein. Eine Fixierung zur Stabilisierung der Halterungseinheit 16 auf dem Amboss 26 kann beispielsweise über die beiden symmetrisch zur Aussparung 18 angeordneten Löcher 20 erfolgen. Die Fixierung kann dann über Schrauben, Gewindestangen, Bolzen oder Dübel realisiert werden. Entsprechende Gewinde oder Löcher müssen sich dann entsprechend auch in dem Amboss 26 befinden. Neben einer Fixierung über zwei Löcher 20 kann die Halterungseinheit 16 auch anders an dem Amboss 26 fixiert werden. Beispielsweise über nur ein Loch oder mehrere nicht symmetrisch zur Aussparung angeordnete Löcher. Alternativ kann die Halterungseinheit 16 auch auf den Amboss 26 geklebt, genietet, oder über andere Arten auf dem Amboss 26 fixiert werden.

Fig. 5 und Fig. 6 zeigen das obere 22 und untere Dämpfungselement 24 in perspektivischer Darstellung. Darstellungsgemäß hat das erste Dämpfungselement 22 eine flache zylindrische Form, wohingegen das zweite Dämpfungselement 24 eine flache, quaderförmige Form mit abgerundeten Ecken aufweist.

Das erste Dämpfungselement 22 hat die Aufgabe, das Befestigungselement 8 durch eine senkrecht auf das Befestigungselement 8 aufgebrachte Kraft in seiner Bewegung gegenüber dem Flachteil 2, 2 a und/oder Fügeteil 10, 10 a einzuschränken. Vorzugsweise sollte das Dämpfungselement 22 direkt und unmittelbar auf dem Befestigungselement 8 angeordnet sein. Idealerweise besitzt das Dämpfungselement 22 eine möglichst ähnliche Oberflächenform wie die an das Dämpfungselement 22 angrenzende Fläche des Befestigungselementes 8.

So wäre in einer Ausführung, in der eine Mutter als Befestigungselement 8 verwendet wird, eine zylindrische Form mit einem Außendurchmesser ähnlich dem Außendurchmesser der Mutter ideal.

Zweckmäßigerweise ist das zweite Dämpfungselement 24 an einer dem Flachteil 2, 2 a zugewandten Fläche des Ambosses 26 angeordnet, vorzugsweise zwischen dem Amboss 26 und dem Flachteil 2, 2 a, insbesondere gegenüber von dem ersten Dämpfungselement 22. Insbesondere kann das zweite Dämpfungselement 24 zwischen dem Amboss 26 und der Halterungseinheit 16 gehalten werden.

Im Falle eines Befestigungsteils 8 angeordnet auf einem Flachteil 2, 2 a, wäre zusätzlich zum Positionieren des Flachteils 2, 2 a durch eine Halterungseinheit 16 und zusätzlich zum Einschränken der Beweglichkeit mittels eines ersten Dämpfungselementes 22, die unterstützende Dämpfung unterhalb des Flachteils 2, 2 a, insbesondere gegenüber von dem ersten Dämpfungselement 22 wünschenswert. Wäre dort gar kein Dämpfungselement vorhanden, so ist anzunehmen, dass die Oberfläche des Flachteils 2, 2 a im Bereich der Kontaktfläche mit dem Amboss 26 beim Ultraschallschweißen beschädigt wird.

Gemäß einem Ausführungsbeispiel kann das erste 22 und zweite Dämpfungselement 24 aus einem elastischen Material, insbesondere aus Polyurethan gebildet sein. Neben Polyurethanen wären auch andere elastische Materialien mit guten Dämpfungseigenschaften wie Gummi oder Kunststoffschäume verwendbar.

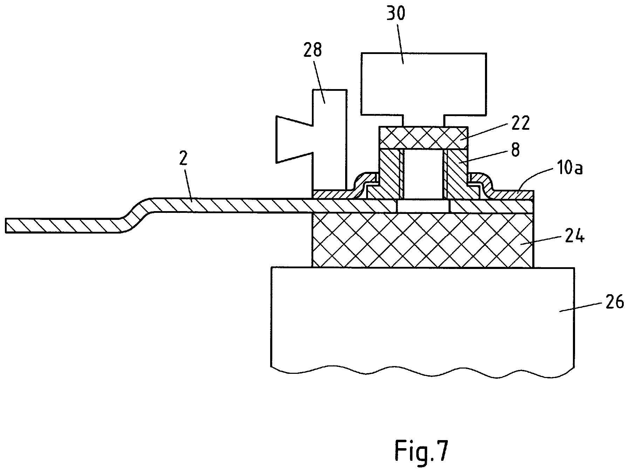

Fig. 7 zeigt eine Schnittdarstellung einer Anordnung eines formschlüssig gehaltenen Befestigungselementes 8 mit seitlich, separat von einem Haltearm 30 angeordneter Sonotrode 28 am Beispiel einer Mutter als Befestigungselement 8. Die Mutter wird darstellungsgemäß von zwei Fügeteilen 10 a und einem Flachteil 2, 2 a formschlüssig gehalten. Auf der Mutter ist ein erstes Dämpfungselement angeordnet, das von einem Haltearm auf der Mutter niedergehalten wird. Zusätzlich ist noch ein zweites Dämpfungselement 24 zwischen dem Amboss 26 und dem Flachteil 2, 2 a eingefügt. Eine Sonotrode 28 liegt seitlich von der Mutter positioniert auf einem Fügeteil 10 a auf.

Durch die darstellungsgemäße seitliche Anordnung der Sonotrode 28 können ein oder mehrere Fügeteile 10, 10 a problemlos per Ultraschallschweißen stoffschlüssig miteinander verbunden werden, während ein formschlüssig, aber drehbar gehaltenes Befestigungselement 8 über ein erstes Dämpfungselement 24 in seiner Relativbewegung zum Flachteil 2, 2 a und/oder Fügeteil 10, 10 a eingeschränkt wird. Die Bewegungseinschränkung kann dabei über eine von einem Haltearm 30 senkrecht auf die Oberfläche des Dämpfungselementes 22 aufgebrachte Kraft realisiert werden.

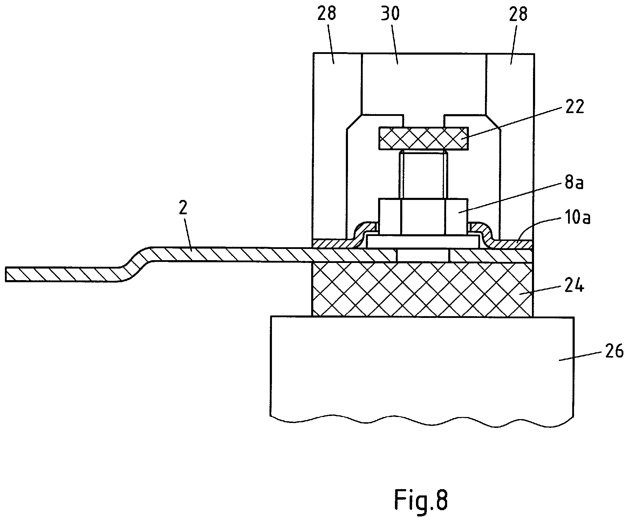

Neben einer seitlich angeordneten Sonotrode 28 können die Fügeteile 10 a auch über eine in Fig. 8 dargestellte U-förmig geformte Sonotrode 28 stoffschlüssig mit dem Flachteil 2 a verbunden werden.

Fig. 8 zeigt eine Schnittdarstellung eines formschlüssig gehaltenen Befestigungselementes 8 a mit einer an einem Haltearm 30 angeordneten U-förmigen Sonotrode 28 am Beispiel einer Schraube als Befestigungselement 8 a.

Die Verwendung einer U-förmigen Sonotrode 28 bietet sich bei der Verwendung von zwei Fügeteilen 10 a an, weil damit beide Fügeteile 10 a gleichzeitig mit dem Flachteil 2 a verschweißt werden können. Bei der darstellungsgemäßen Anordnung der U-förmigen Sonotrode 28 an einem Haltearm 30 muss eine entsprechende Vorrichtung zum Dämpfen vorgesehen sein, so dass die an die Sonotrode 28 übertragenen mechanischen Schwingungen nicht an den Haltearm 30 übertragen werden. Alternativ kann die U-förmig geformte Sonotrode 28 deshalb auch separat von dem Haltearm 30 an die zu verschweißenden Teile herangeführt werden. Ferner besteht auch die Möglichkeit, einen Haltearm, der die Kraft für die Dämpfung des entsprechenden beweglichen Teils auf das erste Dämpfungselement ausüben kann, fest an der Halterungseinheit anzuordnen.

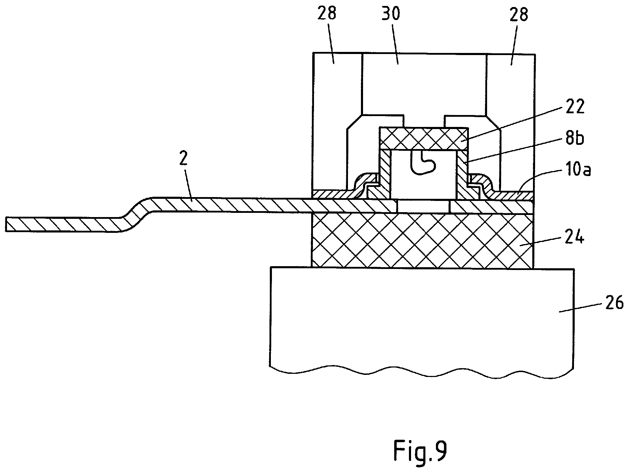

Fig. 9 zeigt eine Schnittdarstellung der Anordnung eines formschlüssig gehaltenen Befestigungselementes 8 b mit einer an einem Haltearm 30 angeordneten U-förmigen Sonotrode 28 am Beispiel eines Bajonettverschlusses als Befestigungselement.

Neben einer Mutter 8, einer Schraube 8 a, oder einem Bajonettverschluss 8 b können auch andere Befestigungsmittel an einem Flachteil 2, 2 a fixiert werden, während diese formschlüssig und drehbar an einem Flachteil 2, 2 a gehalten werden.

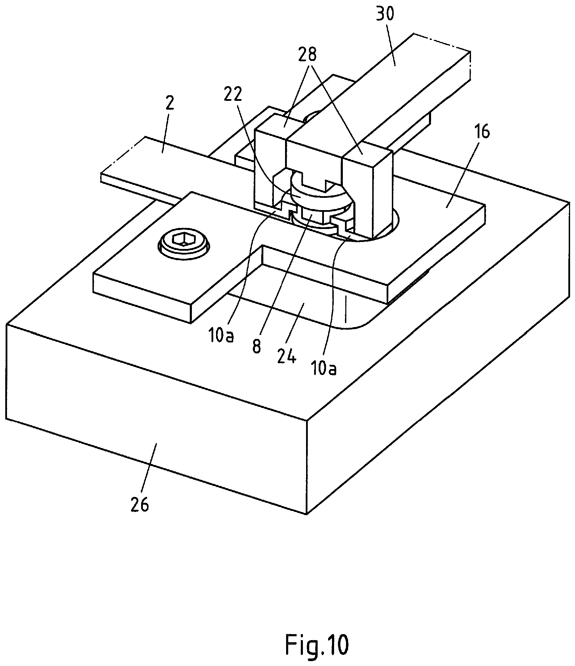

Fig. 10 zeigt eine perspektivische Darstellung einer Anordnung eines formschlüssig gehaltenen Befestigungselementes 8 mit einer an einem Haltearm 30 angeordneten U-förmigen Sonotrode 28.

Die Ausführungsform in Fig. 10 zeigt eine Mutter mit einem radial nach außen weisenden Kragen 9 als Beispiel eines Befestigungselementes 8. Die Mutter wird gleichzeitig drehbar und formschlüssig zwischen zwei Fügeteilen 10 a und einem Flachteil 2 a gehalten, während das Flachteil 2 a seinerseits durch ein zweites Dämpfungselement 24 gedämpft auf einem Amboss 26 aufliegt und die Mutter 8 von einer Halterungseinheit 16 mit U-förmiger Aussparung von drei Seiten formschlüssig umschlossen wird. Die Halterungseinheit 16 ist über zwei Schrauben an dem Amboss 26 fixiert. Das drehbar angeordnete Befestigungselement 8 wird zusätzlich über ein erstes Dämpfungselement 22 in seiner Bewegung relativ zum Flachteil 2 a und/oder zumindest einem Fügeteil 10 a eingeschränkt. Die dafür senkrecht auf die Oberfläche des ersten Dämpfungselementes 22 aufzubringende Kraft wird von einem Haltearm 30 aufgebracht, der über dem ersten Dämpfungselement 22 positioniert ist. An dem Haltearm 30 ist eine U-förmig geformte Sonotrode 28 angeordnet, die auf den Anschlussflächen der Fügeteile 10 a aufliegt und diese per Ultraschallschweißverfahren mit dem Flachteil 2 a verschweißen kann.

Fig. 11 zeigt eine Schnittdarstellung einer Anordnung eines gefangenen Befestigungselementes 8 nach Fig. 3a, 3b. Eine Sonotrode 28 ist dabei an einem ersten Ende des Flachteils 2 vorgesehen, um an dem Flachteil 2 ein Kabelenede anzuschweißen. Hierfür werden die blanken Kabelenden, insbesondere aus Aluminium, mittels Ultraschall mit dem Flachteil 2 verschweißt. Die hierdurch in das Flachteil eingebrachte Schwingung wird auf das Befestigungselement 8 geleitet. Durch das Aufdrücken des Dämpfungselements 22 wird das Befestigungselement 8 jedoch gedämpft. Gleichzeitig wird durch den Anpressdruck, z.B. 6 bis 8 bar, des Dämpfungselements 22 auf das Befestigungselement 8 eine elastische Verformung des Flachteils 2 bewirkt. Diese führt zu einer Federspannung in dem Flachteil 2, wodurch dieses ebenfalls als Schwingungsdämpfer fungiert und die USS Schwingungen dämpft.

Auf dem Befestigungselement 8 ist ein erstes Dämpfungselement 22 angeordnet, das von einem Haltearm 30 niedergehalten wird. Zusätzlich ist noch ein zweites Dämpfungselement 24 zwischen dem Amboss 26 und dem Flachteil 2, 2 a eingefügt. Das zweite Dämpfungselement 24 ist dabei vorzugsweise nur in Kontakt mit dem Flachteil 2, nicht aber dem Befestigungselement 8.

Das Befestigungselement 8 ist über ein erstes Dämpfungselement 24 in seiner Relativbewegung zum Flachteil 2, 2 a und/oder Fügeteil 10, 10 a eingeschränkt. Die Bewegungseinschränkung kann dabei über eine von einem Haltearm 30 senkrecht auf die Oberfläche des Dämpfungselementes 22 aufgebrachte Kraft realisiert werden.

Auch zu erkennen ist, dass das Dämpfungselement 22 in einem Sackloch in dem Haltearm 30 eingepresst ist.

Fig. 12 zeigt eine perspektivische Darstellung einer Anordnung eines gefangenen Befestigungselementes 8 nach Fig. 3a, b mit einem Haltearm 30 der an Seitenschiebern 30a angeordnet ist.

Das Flachteil2 wird zunächst zwischen die Seitenschieber 30a eingelegt. Dabei wird das Flachteil 2 an dem Befestigungselement 8 über die Halterungseinheit 16 ausgerichtet. Anschließend werden die Seitenschieber 30a zusammengefahren und das Flachteil 2 somit zwischen den Seitenschiebern gehalten. Eine Sonotrode 28 wird in Richtung des Amboss 26 auf einer Seite der Seitenschieber 30a bewegt. Hierdurch wird die Sonotrode auf Kabelenden aufgedrück um diese mit dem Flachteil mittels USS zu verschweißen.

Gleichzeitig wird der Haltearm 30 winklig zu der Bewegung der Seitenschieber 30a auf das Befestigungselement 8 zu bewegt. Hierdurch wird das Dämpfungselement 22 auf das Befestigungselement 8 gepresst und das Befestigungselement 8 wird gegenüber Schwingungen gedämpft.

Das drehbar angeordnete Befestigungselement 8 wird über das erste Dämpfungselement 22 in seiner Bewegung relativ zum Flachteil 2 a eingeschränkt. Die dafür senkrecht auf die Oberfläche des ersten Dämpfungselementes 22 aufzubringende Kraft wird von einem Haltearm 30 aufgebracht, der über dem ersten Dämpfungselement 22 positioniert ist. Der Anpressdruck kann mehr als 1 bar, vorzugsweise weniger als 8bar, insbesondere zwischen 2 und 8 bar, vorzugsweise in etwa 6bar betragen.

Besonders vorteilhaft an der Ultraschallschweißvorrichtung ist dessen modularer Aufbau aus zumindest einem Halterungselement und/oder zumindest einem Dämpfungselement. So besteht die Möglichkeit einer besonders einfachen, rein mechanischen Implementierung der Vorrichtung in andere bestehende Systeme. Durch die einfache Art der Nachrüstung sind keine weiteren nachträglichen Änderungen nötig. So kann man einen Haltearm auch fest an der Halterungseinheit anordnen, der dann flexibel verstellbar ähnlich wie eine Schraubzwinge die nötige Kraft für die Dämpfung des entsprechenden beweglichen Teils auf das erste Dämpfungselement ausüben kann.

## Patentansprüche

1. Verfahren zum Ultraschallschweißen eines Flachteils mit einem Fügeteil oder einem Anschlussteil, bei dem
- ein Befestigungselement (8) freilaufend und verliersicher an einem Flachteil angeordnet wird, und
- ein Dämpfungselement (22) derart an dem Befestigungselement (8) angelegt wird, dass eine Relativbewegung zwischen dem Befestigungselement (8) und dem Flachteil beim anschließenden ultraschallverschweißen von dem Flachteil mit dem Fügeteil oder dem Anschlussteil eingeschränkt wird, wobei
- das Befestigungselement (8) mit Hilfe des Dämpfungselements (22) während des Ultraschallschweißens gegen das Flachteil gepresst wird.

2. Verfahren nach Anspruch 1,
**dadurch gekennzeichnet, dass**
das Befestigungselement (8) über eine von einem Haltearm senkrecht auf das Dämpfungselement (22) ausgeübte Kraft in seiner Relativbewegung zu dem Flachteil und/oder einem Fügeteil eingeschränkt wird.

3. System eingerichtet zur Durchführung des Verfahrens nach einem der Ansprüche 1 oder 2 umfassend:
- ein Flachteil,
- ein Befestigungselement, welches freilaufend an dem Flachteil und verliersicher an einem Flachteil angeordnet,
- ein Fügeteil oder ein Anschlussteil, welches mit dem Flachteil ultraschallverschweißt wird, und
- einer Ultraschallschweißvorrichtung mit
- eine Sonotrode (28),
- einen Amboss (26), und
- zumindest ein an dem Befestigungselement (8) anpressbares Dämpfungselement (22), bei dem
- das Dämpfungselement (22) derart an dem Befestigungselement (8) angelegt ist, dass eine Relativbewegung zwischen dem Befestigungselement (8) und dem Flachteil beim anschließenden ultraschallverschweißen von dem Flachteil mit dem Fügeteil oder dem Anschlussteil eingeschränkt ist, wobei
- das Befestigungselement (8) mit Hilfe des Dämpfungselements (22) während des Ultraschallschweißens gegen das Flachteil gepresst ist.

4. System nach Anspruch 3,
**dadurch gekennzeichnet, dass**
das Befestigungselement (8) durch zumindest ein, vorzugsweise zwei Fügeteile an dem Flachteil angeordnet ist, wobei das Fügeteil das Befestigungselement (8) teilweise, vorzugsweise vollständig umgreift oder dass das Befestigungselement (8) in einer Öffnung des Flachteils verliersicher angeordnet ist.

5. System nach einem der Ansprüche 3 bis 4,
**dadurch gekennzeichnet, dass**
eine der Berührflächen zwischen der Sonotrode (28) und zumindest einen Fügeteils oder einem an dem Flachteil anzuschweißenden Anschlussteil seitlich von dem Befestigungselement (8) angeordnet ist.

6. System nach einem der Ansprüche 3 bis 5,
**dadurch gekennzeichnet, dass**
- zumindest zwei vorzugsweise linear zueinander bewegliche Seitenschieber derart angeordnet sind, dass das Flachteil zwischen den Seitenschiebern beim Schweißen gehalten ist und dass an zumindest einem der Seitenschieber ein Haltearm derart angeordnet ist, dass der Haltearm winklig zur linaren Bewegung in Richtung des Befestigungselements beweglich ist und an dem Haltearm das zumindest ein Dämpfungselement (22) angeordnet ist.

7. System nach einem der Ansprüche 3 bis 6,
**dadurch gekennzeichnet, dass**
- das zumindest eine Dämpfungselement (22) an einer dem Befestigungselement zugewandten Seite eines Haltearms angeordnet ist.

8. System nach einem der Ansprüche 3 bis 7,
**dadurch gekennzeichnet, dass**
zumindest ein zweites Dämpfungselement (24) an einer dem Flachteil zugewandten Fläche des Ambosses (26) angeordnet ist, vorzugsweise zwischen dem Amboss (26) und dem Flachteil, insbesondere auf der dem ersten Dämpfungselement (22) gegenüberliegenden Seite des Flachteils und/oder dass das zweite Dämpfungselement (24) zwischen dem Amboss (26) und einer Halteeinheit gehalten ist.

9. System nach einem der Ansprüche 3 bis 8,
**dadurch gekennzeichnet, dass**
das erste Dämpfungselement (22) unmittelbar an oder auf dem Befestigungselement (8) aufliegt und/oder dass das zweite Dämpfungselement (24) an dem Flachteil angeordnet ist, wobei das zweite Dämpfungselement (24) vorzugsweise beabstandet von dem Befestigungselement (8) ist.

10. System nach Anspruch 7,
**dadurch gekennzeichnet, dass**
das erste Dämpfungselement (22) mit einer Übergangspassung oder einer Presspassung an dem Haltearm, insbesondere in einem Sackloch in dem Haltearm angeordnet ist.

11. System nach Anspruch 7,
**dadurch gekennzeichnet, dass**
der Haltearm das Dämpfungselement (22) derart gegen das Befestigungselement (8) drückt, dass das Flachteil elastisch verformt wird und/oder der Haltearm derart angeordnet ist, dass eine Relativbewegung zwischen dem Befestigungselement (8) und dem Flachteil und/oder dem Fügeteil beim Ultraschallschweißen, durch eine von dem Haltearm senkrecht auf die Oberfläche des ersten Dämpfungselements (22) aufgebrachte Kraft eingeschränkt ist.

12. System nach einem der Ansprüche 3 bis 11,
**dadurch gekennzeichnet, dass**
das Befestigungselement (8) ein Drehbefestigungselement, insbesondere eine Schraube, eine Mutter, ein Steck-Dreh-Verschluss oder ein Bajonettverschluss ist und/oder
das Befestigungselement (8) einen radial nach außen weisenden, teilweise umlaufenden, vorzugsweise vollständig umlaufenden Kragen (9) aufweist.

13. System nach einem der Ansprüche 3 bis12
**dadurch gekennzeichnet, dass**
das Flachteil als Kabelanschlusselement, insbesondere als Kabelschuh gebildet ist, wobei der Kabelschuh vorzugsweise ein Reibschweißkabelschuh, ein Crimpkabelschuh oder ein Ultraschallschweiß-Kabelschuh ist.

14. System nach einem der Ansprüche 3 bis 13,
**dadurch gekennzeichnet, dass**
eine Halterungseinheit das Flachteil von zumindest drei Seiten formschlüssig umfasst und im Bereich einer Kontaktfläche mit dem Befestigungselement (8) eine zum Befestigungselement (8) komplementäre Struktur aufweist und/oder eine Halterungseinheit formschlüssig auf dem Amboss (26) angeordnet ist, wobei die Halterungseinheit vorzugsweise an dem Amboss (26) fixiert ist.

## Claims

1. A method of ultrasound welding a flat part with a joining part or a connection part, in which
- a fastening element (8) is captively and in a free running manner arranged on a flat part, and
- a damping element (22) is arranged at the fastening element (8) in such a way that a relative movement between the fastening element (8) and the flat part during the subsequent ultrasonic welding is restricted, wherein
- the fastening element (8) is pressed against the flat part by means of the damping element (22) during the ultrasonic welding.

2. The method according to Claim 1,
**characterised in that**
the relative movement between the fastening element and the flat part and/or the joining part is restricted via a force applied by a holding arm perpendicularly to the damping element.

3. A system arranged for working the method according to one of claims 1 or 2 comprising
- a flat part,
- a fastening element (8) which is captively and in a free running manner arranged on a flat part,
- a joining part or a connection part, which is welded by ultrasonic welding to the flat part and
- an ultrasonic welding device with
- a sonotrode (28)
- an anvil (26), and
- at least one damping element (22) that can be pressed on a fastening element (8), wherein
- the damping element (22) is arranged at the fastening element (8) in such a way that a relative movement between the fastening element (8) and the flat part during the subsequent ultrasonic welding is restricted, wherein
- the fastening element (8) is pressed against the flat part by means of the damping element (22) during the ultrasonic welding.

4. System according to Claim 3,
**characterised in that**
the fastening element (8) is arranged by at least one, preferably two joining parts on the flat part, wherein the joining part encompasses the fastening element (8) in part, preferably in full, or **in that** the fastening element (8) is captively arranged in an opening of the flat part.

5. System according to one of claims 3 to 4,
**characterised in that**
one of the contact surfaces between the sonotrode (28) and the at least one joining part or connecting part to be welded to the flat part is arranged laterally to the fastening element (8).

6. System according to one of claims 3 to 5,
**characterised in that**
- at least two side pushers preferably moving linearly towards one another are arranged in such a way that the flat part is held between the side pushers during welding and that on at least one of the side pushers a holding arm is arranged such that the holding arm is movable at an angle to the linear movement in the direction of the fastening element and on the holding arm at least one damping element (22) is arranged.

7. System according to one of claims 3 to 6,
**characterised in that**
- the at least one damping element (22) is arranged on a side of the holding arm facing towards the fastening element.

8. System according to one of claims 3 to 7,
**characterised in that**
at least one second damping element (24) is arranged on a surface of the anvil (26) facing towards the flat part, preferably between the anvil (26) and the flat part, particularly on the side of the flat part opposite the first damping element (22) and/or **in that** the second damping element is held between the anvil (26) and a holding unit

9. System according to one of claims 3 to 8,
**characterised in that**
the first damping element (22) is arranged directly at or on the fastening element (8) and/in that the second damping element (24) is arranged on the flat part, wherein the second damping element (24) is preferably spaced apart from the fastening element (8).

10. System according to claim 7,
**characterised in that**
the first damping element (22) is arranged with a transition fit or a press fit on the holding arm, particularly in a blind hole in the holding arm.

11. System according to claim 7,
**characterised in that**
the holding arm pushes the damping element (22) against the fastening element (8) such that the flat part is elastically deformed and/or the holding arm is arranged such that a relative movement between the fastening element (8) and the flat part and/or the joining part during ultrasonic welding is restricted by a force applied perpendicularly to the surface of the first damping element (22).

12. System according to one of claims 3 to 11,
**characterised in that**
the fastening element (8) is a rotating fastening element, particularly a screw, a nut, a twist and lock fastener or a bayonet fastener and/or the fastening element (8) comprises a collar (9) pointing radially outwards, and running part of the way, preferably all the way round.

13. System according to one of claims 3 to 12,
**characterised in that**
the flat part is in the form of a cable connection element, particularly a cable shoe, wherein the cable shoe is preferably a friction-welding cable shoe, crimping cable shoe, or ultrasonic welding cable shoe.

14. System according to one of claims 3 to 13,
**characterised in that**
a holding unit surrounds the flat part in a positively locking manner on three sides and in the area of the contact surface with the fastening element (8) has a complementary structure and/or a holding unit is arranged form fit on the anvil (26), wherein the holding unit is preferably fixed to the anvil (26).

## Revendications

1. Méthode de soudage par ultrasons d'une pièce plate avec une pièce d'assemblage ou une pièce de raccordement, dans lequel
- un élément de fixation (8) est disposée à une pièce plate de manière à bouger librement et de manière inamovible, et
- un élément d'amortissement (22) est appliqué sur l'élément de fixation (8) de telle sorte qu'un mouvement relatif entre l'élément de fixation (8) et la pièce plate est limité lors d'un soudage par ultrasons ultérieur de la pièce plate avec la pièce d'assemblage ou la pièce de raccordement,
où
- l'élément de fixation (8) est pressé contre la pièce plate à l'aide de l'élément d'amortissement (22) pendant le soudage par ultrasons.

2. Méthode selon la revendication 1,
**caractérisé en ce que**
l'élément de fixation (8) est limité dans son mouvement relatif par rapport à la pièce plate et/ou à une pièce d'assemblage par une force exercée par un bras de maintien perpendiculairement à l'élément d'amortissement (22).

3. Système aménagé pour la mise en œuvre de la méthode selon l'une des revendications 1 ou 2 comprenant:
- une pièce plate,
- un élément de fixation disposée à une pièce plate de manière à bouger librement et de manière inamovible,
- une pièce d'assemblage ou une pièce de raccordement qui est soudée par ultrasons à la pièce plate, et
un dispositif de soudage par ultrasons avec
une sonotrode (28),
une enclume (26), et
au moins un élément d'amortissement pressable contre l'élément de fixation (8) (22), dans lequel
l'élément d'amortissement (22) est appliqué sur l'élément de fixation (8) de telle sorte qu'un mouvement relatif entre l'élément de fixation (8) et la partie plate lors du soudage par ultrasons de la pièce plate avec la pièce d'assemblage ou la pièce de raccordement est limité,
où
l'élément de fixation (8) est pressé contre la pièce plate à l'aide de l'élément d'amortissement (22) pendant le soudage par ultrasons.

4. Système selon la revendication 3,
**caractérisé en ce que**
l'élément de fixation (8) est disposé par au moins une, de préférence deux pièces d'assemblage à la pièce plate, où la pièce d'assemblage entoure l'élément de fixation (8) partiellement, de préférence complètement, ou que l'élément de fixation (8) est disposé dans une ouverture de la pièce plate de manière inamovible.

5. Système selon l'une des revendications 3 à 4,
**caractérisé en ce que**
l'une des surfaces de contact entre la sonotrode (28) et au moins une pièce d'assemblage ou une pièce de raccordement à souder sur la pièce plate est disposée latéralement par rapport à l'élément de fixation (8).

6. Système selon l'une des revendications 3 à 5,
**caractérisé en ce que**
au moins deux coulisseaux latéraux mobiles de préférence linéairement l'un par rapport à l'autre sont disposés de telle sorte que la pièce plate est maintenue entre les coulisseaux latéraux lors du soudage et qu'un bras de maintien est disposé sur au moins l'un des coulisseaux latéraux de telle sorte que le bras de maintien est mobile de manière anglée par rapport au mouvement linéaire dans la direction de l'élément de fixation et que l'au moins un élément d'amortissement (22) est disposé sur le bras de maintien.

7. Système selon l'une des revendications 3 à 6,
**caractérisé en ce que**
le au moins un élément d'amortissement (22) est disposé sur un côté d'un bras de fixation orienté vers l'élément de fixation.

8. Système selon l'une des revendications 3 à 7,
**caractérisé en ce que**
au moins un deuxième élément d'amortissement (24) est placé sur une surface de l'enclume (26) orienté vers la partie plate, de préférence entre l'enclume (26) et la partie plate, en particulier sur le côté de la partie plate opposé au premier élément d'amortissement (22) et/ou que le deuxième élément d'amortissement (24) est maintenu entre l'enclume (26) et une unité de maintien.

9. Système selon l'une des revendications 3 à 8,
**caractérisé en ce que**
le premier élément d'amortissement (22) est directement en contact à ou sur l'élément de fixation (8) et/ou que le deuxième élément d'amortissement (24) est disposé sur la partie plate, où le deuxième élément d'amortissement (24) est de préférence espacé de l'élément de fixation (8).

10. Système selon la revendication 7,
**caractérisé en ce que**
le premier élément d'amortissement (22) est fixé par un ajustement de transition ou un ajustement serré sur le bras de maintien, en particulier dans un trou borgne dans le bras de maintien.

11. Système selon la revendication 7,
**caractérisé en ce que**
le bras de maintien presse l'élément d'amortissement (22) contre l'élément de fixation (8) de telle sorte que la pièce plate est déformée élastiquement et/ou le bras de support est disposé de telle sorte qu'un mouvement relatif entre l'élément de fixation (8) et la pièce plate et/ou la pièce d'assemblage lors du soudage par ultrasons est limité par une force appliquée par le bras de maintien perpendiculairement à la surface du premier élément d'amortissement (22).

12. Système selon l'une des revendications 3 à 11,
**caractérisé en ce que**
l'élément de fixation (8) est un élément de fixation rotatif, en particulier vis, un écrou, une fermeture rotative enfichable ou une fermeture à baïonnette
et/ou
l'élément de fixation (8) comporte un collet orienté radialement vers l'extérieur, partiellement périphérique, de préférence complètement périphérique (9).

13. Système selon l'une des revendications 3 à 12
**caractérisé en ce que**
la partie plate est formée comme élément de raccordement de câble, en particulier comme cosse de câble, où la cosse de câble est de préférence une cosse à souder par friction, une cosse à sertir ou une cosse à sertir ou une cosse de câble à souder par ultrasons.

14. Système selon l'une des revendications 3 à 13,
**caractérisé en ce que**
une unité de maintien entoure la pièce plate par complémentarité de forme sur au moins trois côtés et a, dans la zone d'une surface de contact avec l'élément de fixation (8), une structure complémentaire à l'élément de fixation (8) et/ou une unité de maintien est disposée par complémentarité de forme sur l'enclume (26), où l'unité de support est de préférence fixée sur l'enclume (26).
